# EUROPEAN PATENT SPECIFICATION

(11) **EP 1 073 562 B1**
(45) Date of publication and mention of the grant of the patent: **22.01.2003**
(21) Application number: 98913097.6
(22) Date of filing: 25.03.1998
(51) Int. Cl.: B60C 11/12, B60C 11/13

(54) **TIRE TREAD WITH 3-DIMENSIONAL SIPE**
REIFENLAUFFLÄCHE MIT 3-D LAMELLEN
BANDE DE ROULEMENT AVEC INCISIONS DE STRUCTURE TRIDIMENSIONELLE

(43) Date of publication of application: 07.02.2001
(73) Proprietor: THE GOODYEAR TIRE & RUBBER COMPANY, Akron, Ohio 44316-0001 (US)
(72) Inventor: HEINEN, Richard, B-6720 Habay-la-Neuve (BE)
(74) Representative: Leitz, Paul
(86) International application number: US9805816
(87) International publication number: WO99048707

(56) References cited:
- EP-A- 0 515 349
- WO-A-96/01189
- GB-A- 1 150 295
- GB-A- 1 241 908
- PATENT ABSTRACTS OF JAPAN vol. 018, no. 453 (M-1662), 24 August 1994 & JP 06 143941 A (YOKOHAMA RUBBER CO LTD:THE), 24 May 1994

## Description

### Technical field

The present invention relates to sipes for tire treads as well as to pneumatic tires whether new or retreaded including such a tread.

### Background art.

The tread portion of a pneumatic tire generally comprises a plurality of circumferentially and laterally extending grooves defining ground engaging rubber elements. The particular size and shape of these elements contribute significantly to the overall performance of the tire.

Winter type tires as well as all season type tires usually have multiple sipes. A sipe is a groove having a width in the range from about 0.2% to 1% of the tread width, i.e. the arc length of the tread surface in the axial direction, that is, in a plane containing the axis of rotation of the tire. The sipe closes when it is located in the tire footprint, i.e. in the contact patch of the tire tread with a flat surface at zero speed and under normal load and pressure. Such a sipe typically is formed by steel blades inserted into a cast or machined mold or tread ring therefor.

A sipe may extend circumferentially or laterally about the tread in a straight, curved or zigzag manner and may be as deep as the grooves or have a depth, which is even greater than the groove depth. The sipes can pass through the sides of the ribs and tread elements or be confined to their interior. It is known to have the sipes lying in planes which are not perpendicular to tangents to the surface of the tread at their point of intersection; the inclination of the planes defining neighboring sipes can be identical or differ step wise along the tread element length. It is further known to use sipes having a depth, which varies across their length, e.g. so-called hump-blades.

The sipes increase the number of biting edges. The local high pressure at each biting edge improves the wiping and digging action of the tread surface, conferring to a tire excellent traction on snow and ice. Furthermore, sipes improve the flexibility of the tread elements without destroying their solidity. The easy relative longitudinal sliding between the opposed faces of a sipe weakens the resistance of the tread elements to flexing in the contact area between tread and road and therefore slows down the heat built-up of the tire; on the other hand this flexing of the tread elements leads to diminished handling performance on dry ground and to reduced braking performance on wet ground.

GB-A- 1.241.908 discloses blades in the form of a plate having a planar edge and an opposing edge provided with at least one projection substantially coplanar with said plate.

GB-A- 1.150.295 discloses a tire with a rib having a plurality of sipes formed therein. The opposed sidewalls of each sipe are provided with one or more projections extending therefrom towards the other sidewall.

Patent Publication WO9601189A published 18 January 1996 is considered the most relevant prior art having the features disclosed in the preamble of claim 1, the feature following the phrase "characterized in that" being the novel elemental features. The dependant claims represent the features of the preferred embodiment of the invention.

The aim of the invention is to create a sipe layout for a winter type tire tread having good traction properties on ice and snow covered roads.

A further aim of the invention is to provide a sipe layout for a tire tread showing excellent handling properties.

A still further aim of the invention is to provide a tire having low tread wear.

### Disclosure of invention.

The invention provides for a tire tread having elastomeric material, the tread having a plurality of grooves defining ground engaging elastomeric elements. At least one of the elastomeric elements includes a sipe having a first surface area and an opposite facing second surface area. Each surface area has a plurality of recesses or protrusions; each recess has a centroid aligned with a centroid of a protrusion and each protrusion extends from the first or second surface area to interlock with a recess. Each protrusion or recess has at least one radially inner end above the depth of the sipe or radially outer end located below the radially outer surface of the ground engaging element. The protrusions and recesses extend from a substantially flat surface in the at least one tread element.

To acquaint persons skilled in the art, most closely related to the instant invention, certain preferred embodiments are now described with reference to the annexed drawings. These embodiments are illustrative and can be modified in numerous ways within the scope of the invention defined in the claims.

### Brief description of the drawings.

- Figure 1 is a perspective view of a blade according to the invention;
- Figures 2A, 2B and 2C are schematic fragmentary views of the same tread pattern portion, new and worn to different degrees;
- Figure 3 is a schematic view of an elastomeric tread element according to the invention, cut up at the location of the blade;
- Figure 4 is a view of a blade not part of the invention having a single and Figure 5 multiple recesses or protrusions.
- Figure 6 represents blades where the recesses or protrusions are mixed, either in shape or dimension.
- Figures 7 shows a bent blade having three portions.
- Figures 8 shows blades not part of the invention with single recesses or protrusions having different shapes.
- Figures 9A through 9E shows elastomeric tread elements including several sipes according to the invention.
- Figures 10 shows several elastomeric tread elements in a directional tread design, the tread elements including sipes according to the invention.

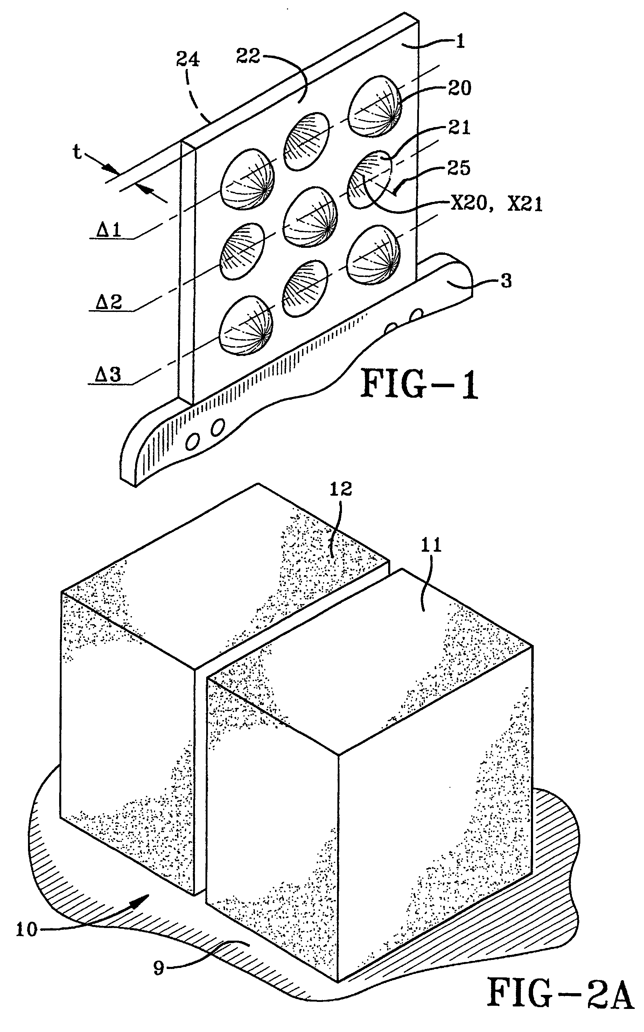

With reference to Figure 1, there is represented a blade 1 according to the invention including a plurality of recesses or protrusions 20, 21. The blade is made of metal, preferably steel and recesses are preferably made into the steel sheet by stamping or embossing. The different recesses 21 on one side of the blade (protrusions 20 on the opposite side), have the same shape and dimension and are arranged along parallel lines Δᵢ, which lines are also parallel to the closest portion of the tread surface. The lines Δᵢ are equally spaced, and in a same line a recess -on one side of the blade- is followed by a protrusion. It is to be understood that in all the drawings only the portions of the blades protruding from the mold surface and having a shaping effect in the elastomeric material composing the tire have been represented, omitting the portion 3 wherewith the blades are anchored in the mold.

It can of course be envisioned to give the lines Δᵢ an inclination ranging between 0 and 45 degrees, preferably 0 to 30 degrees with respect to the closest portion of the tread surface or to change the inclination of each lines Δᵢ in function of its spacing from the tread surface. Furthermore, the dimension of the recesses may be different at different locations in the blades: when the tread element wears down, stiffness of the tread element increases and less interlocking, is required. Consequently, the recesses may be given either a greater lateral spacing or a smaller dimension, when their distance with respect to the surface of the new or as molded tread increases.

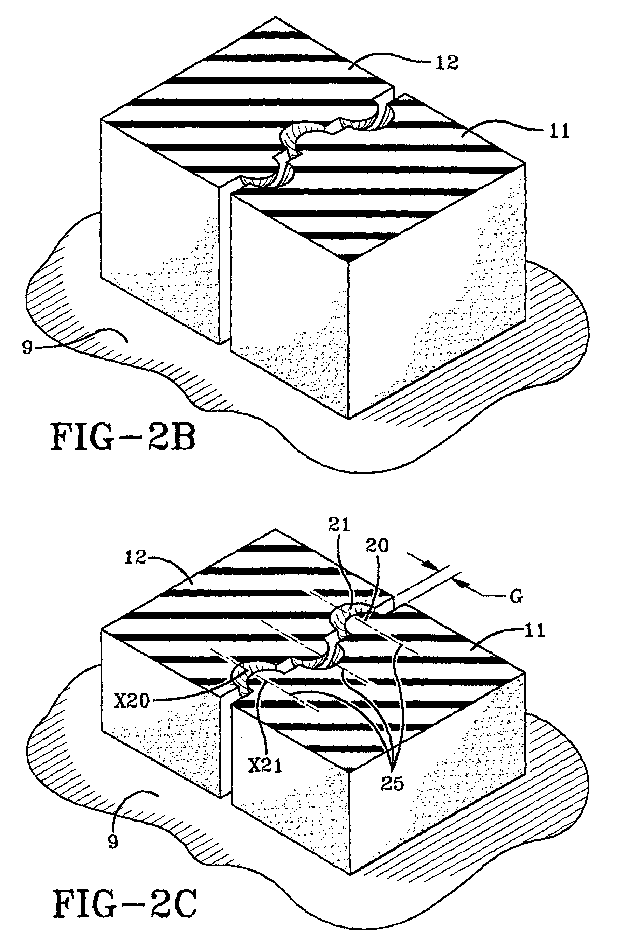

With reference to Figure 2A, 2B, 2C, there is represented a single elastomeric tread element 10 of a tread pattern after the vulcanization step, divided into two elastomeric segments 11 and 12 by a single blade according to the invention. The neighboring tread elements or ribs of the tread pattern have not been represented for simplification and clarity. The tread element 10 is shown in different states of wear. As represented in Figure 2A, the tread element 10, unworn, is divided into two rectangular portions defined by the radially innermost portion of the blade 1. Radially innermost means here the portion of the blade which is closest to the mold (not represented) wherein the blade is inserted. The same tread portion shown in Figure 2B, is worn to about 25 % of its original radial height and the radially outer surface of the tread element 10 shows three portions of a circle separated by straight lines. The same tread portion shown in Figure 2C is worn to about 50 % of its original radial height. It appears that the three portions of the circle have an opposite orientation to the one represented in Figure 2B.

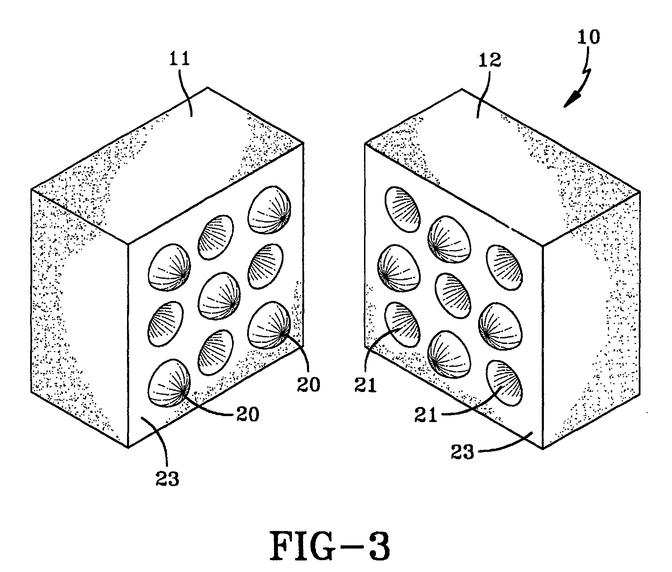

Referring to Figure 3, showing the tread element 10 of Figure 2, cut up at the location of the sipe, in a perspective view. The protrusions 20 cooperating with the recesses 21 tend to interlock the adjacent elastomeric segments 11 and 12, whereas the substantially flat surfaces 23 allow a gliding of the adjacent substantially flat surfaces 23. By choosing the ratio of the dimension of the flat surface 23 to the number, location and dimensions of the recesses 21 and protrusions 20, the stiffness of two adjacent elastomeric segments 11, 12 can be adapted to the requirements.

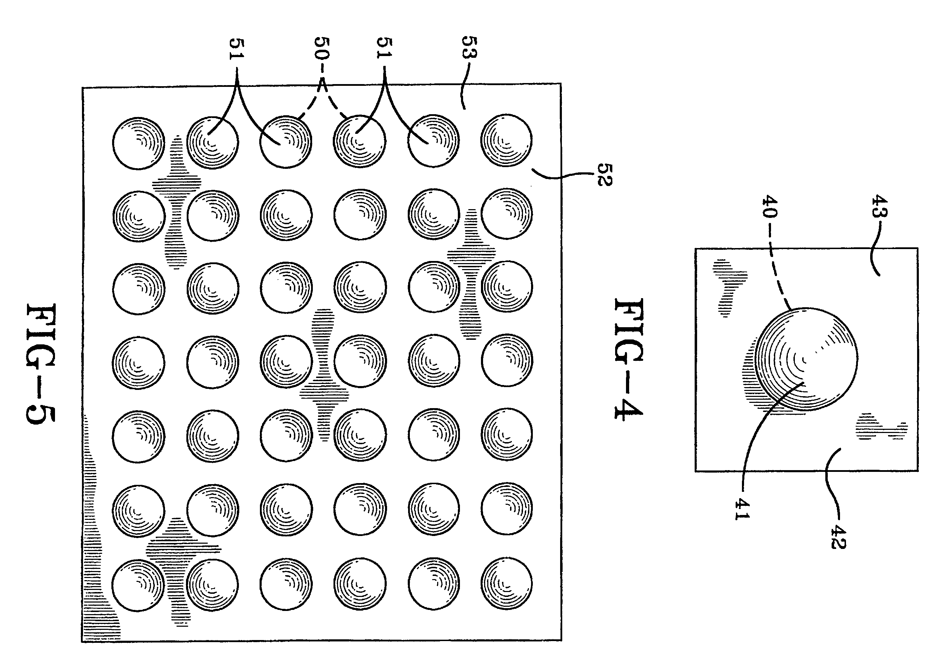

In Figure 4 a blade 42 not part of the invention, including one single large recess 41 and in Figure 5 a blade 52 including a large number of small recesses 51 has been represented, it being understood a corresponding numbered projections 40, 50 extend from the opposite face of the blades 42, 52.

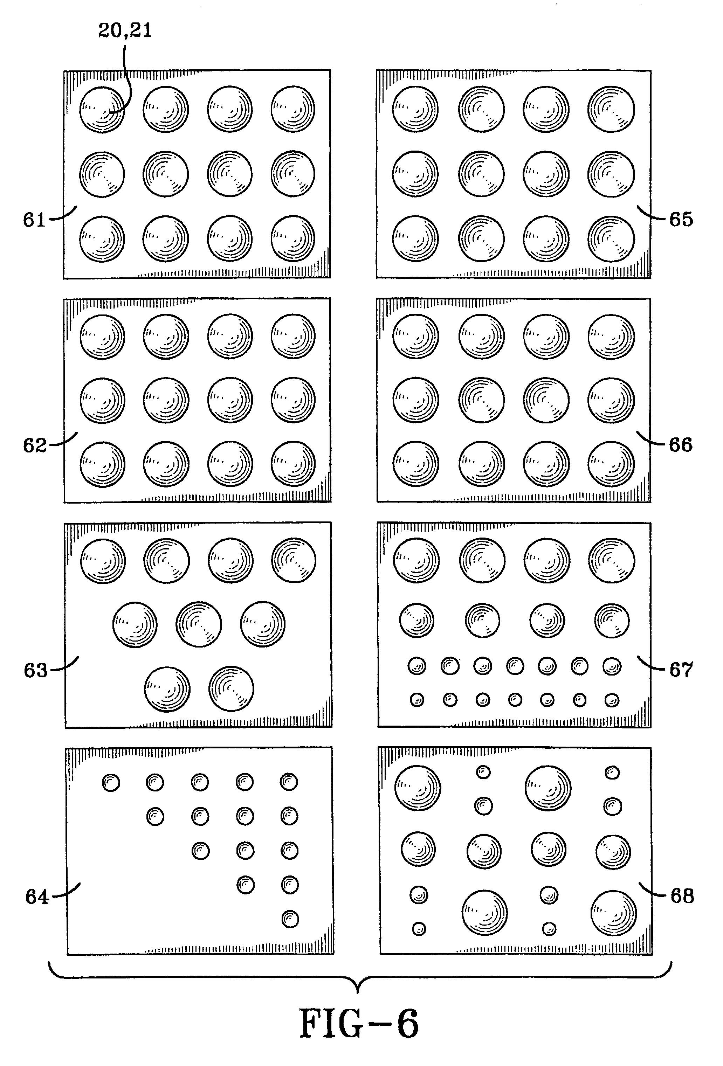

In Figure 6, several blades where the recesses 21 or protrusions 20 are mixed, either in shape or dimension, have been represented.

Those skilled in the art of molding will appreciate that a protrusion 20 extending from the surface 23 of a blade I will form a recess 21 in the molded elastomeric tread element 10 and correspondingly a recess 21 in a blade 1 will cause a protrusion 20 to be formed in the molded element 10.

Referring to Figure 1 of a blade, each protrusion 20 has a surface area defining its exterior shape. As shown the shapes are hemispherical. The centroid X20 of a hemispherical shape lies along the axis 25 passing through the center of the circular base of the hemisphere to a location about two-thirds from the peak of the hemisphere. This location X20 is the volumetric center of the hemispherical shaped projection 20.

As used herein, centroid means the center of mass; centroidally means passing through the centroids. The centroid of a hemispherical projection as measured along the outer surface is a point in space wherein origin of the radius of curvature lies, similarly for a hemispherical recess, the centroid is found as a point in space wherein the origin of the radius of curvature of the inner surface lies. In a flat blade for a sipe, these centroids are not only aligned but are in fact coincident, thus the same point in space.

The recess 21 similarly is hemispherical in shape and accordingly follows the same mathematical formula to determine its centroid X21. If measured from the first surface area 22, the centroid X21 similarly lies along an axis 25 coincident with the associated projection 20 assuming each recess 21 and projection 20 is measured from the same face of 22 or 24 of the blade 1, then the centroids X20, X21 are exactly coincident or at the same location. Alternatively if the centroids of each aligned recess 21 and projection 20 is measured from an opposing face 23, 24, then the centroids will be aligned on the same axis, but spaced by the thickness (t) of the blades.

As one refers Figures 2B and 2C to the tread elements 10, it is easily appreciated that the alignment of the axis 25 on which each centroid X20 and X21 lies, has the centroids X20 and X21 spaced from the other by the gap formed by the blade. As the tire rolls into the footprint, the gap G closes causing the centroids X20 and X21 to become coincident. The resultant effect is that the element portions 12 and 11 interlock, greatly increasing the rigidity of the element. The movement from flexible elements entering the tires footprints and then increasing stiffness as the tire rolls through the footprint greatly enhances the tire designers ability to change the dynamic stiffness of the element as a function of wear condition and performance requirements.

Figure 6 of blades 61 through 68 show a wide range of combinations of recesses and protrusions that permit the resultant elements 10 to have a range of stiffness variations based on location size and orientation of different combinations of these aligned recesses 21 and protrusions.

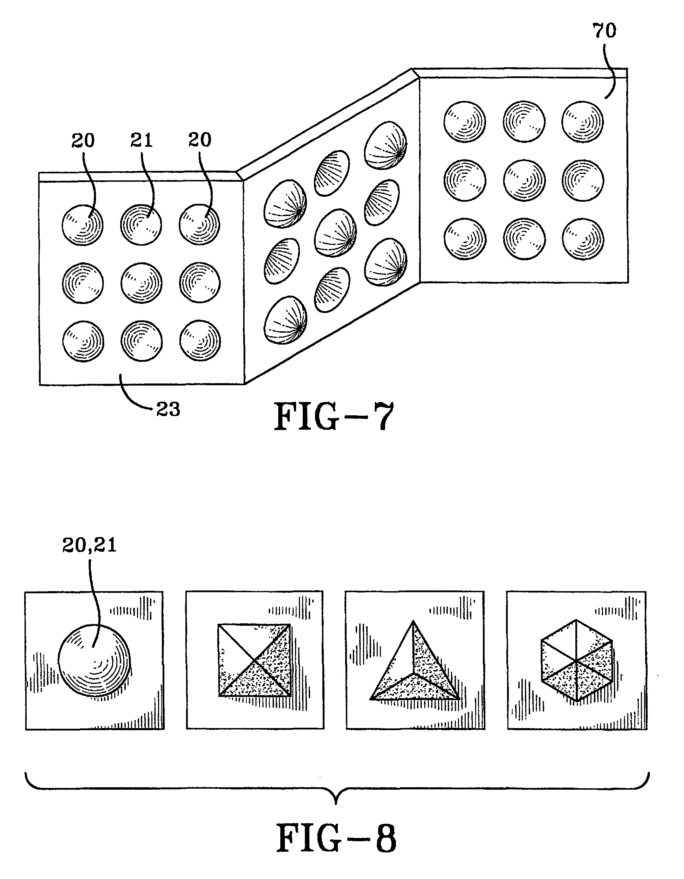

In Figure 7, it is shown that the concept is equally applicable to bent blades 70.

While the preferred embodiment shows the use of hemispherical shaped protrusions and recesses, the concept works with almost any known shape.

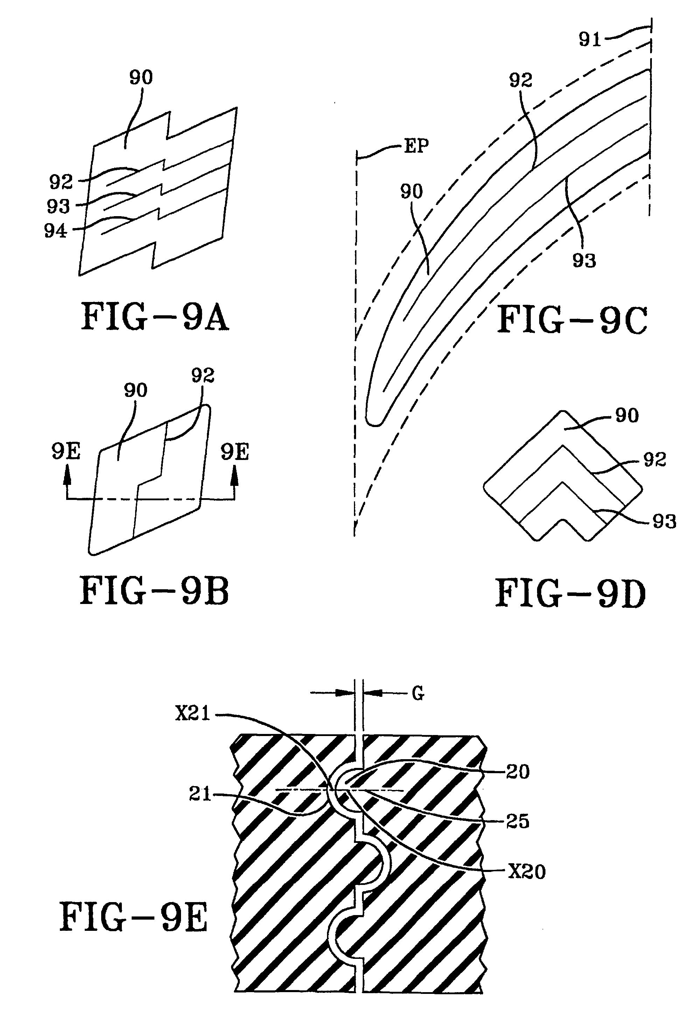

In Figures 9A through 9D a variety of bent or curved sipes 92, 93, 94 are shown in various tread elements 90. Each element 90 has the inventive use of recesses 21 and protrusions 20 being along coincident axis 25 with centroids X20 and X21 shown on the axis 25 spaced by the gap G of the sipe. As the tire tread element 90 enters the footprint, the gap G closes and the centroids become coincident causing an interlocking engagement of recesses and protrusions. As shown, it is preferable that at least some of protrusions, if not all, extend sufficiently to be at least partially extended into an adjoining recess in the open sipe condition when the tire tread element is not in the contact or footprint patch. This helps insure the elements will properly interlock under load.

Figure 9c shows an elongated elastomeric block 90, which takes its origin close to the equatorial plane EP of the tire and extends to the shoulder 91. The block 90 includes two elongated sipes 92 and 93. The sipes extend from a point close to the equatorial plane to the shoulder 91 and are roughly parallel to the grooves 93 and 94 which grooves cooperate with the shoulder 91 of the tire to delimit the block 90. By choosing a variable lateral recess density in the sipes 92, 93, the stiffness of the block 90 may be varied almost continuously from the equatorial plane EP towards the shoulder 91 of the tire. Close to the shoulder 91 stiff blocks or block portions are of advantage in order to have good handling properties whereas towards the center of the tire less stiff block portions have a lower wear. Consequently, elongated sipes provided with only few recesses towards the center and numerous recesses towards the shoulder are recommended (see in this connection blade 64 shown on Figure 6). Furthermore as is well known in the art, heel and toe wear can be reduced by making the portion of the block which leaves the footprint of the tire last less stiff than the portion which leaves the footprint of the tire first. Consequently, in order to allow more flexing of the elastomeric material, sipe 92 should also be molded by a blade having more recesses than the blade molding sipe 93.

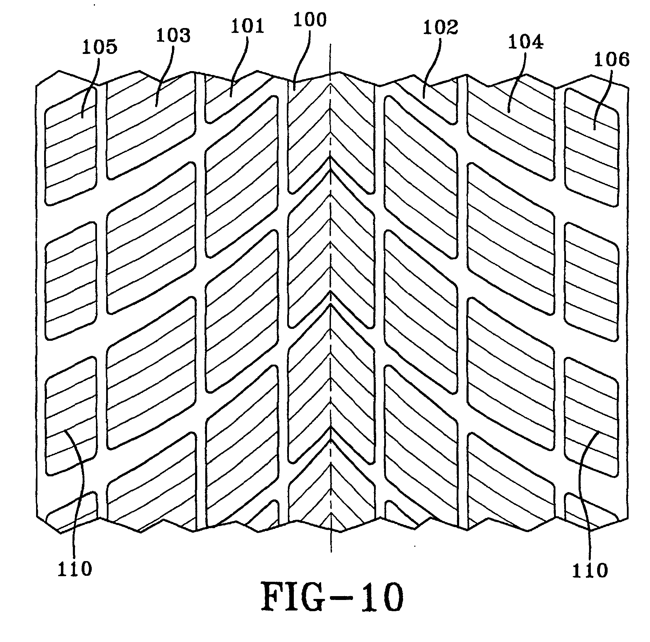

In Figure 10 a partial tread pattern is shown wherein the tread elements 100, 101, 102, 103, 104, 105 and 106 are arranged in circumferential rows forming a heavily siped directional tread pattern. The sipes 110 employing the recesses 21 and protrusions 20 show a very smooth and simple blading pattern. The number of recesses in the blocks belonging to different rows may may be chosen different, so as to have rows of different stiffness; likewise, the siping technology according to the invention allows to confer a laterally varying stiffness to all or some of the blocks. Not until the tread is worn appreciably will the submerged recesses 21 and protrusions 20 be revealed and then only after they have been efficiently providing improved handling performance over thousands of kilometers.

## Claims

1. A tire tread having elastomeric material, the tread having a plurality of grooves defining ground engaging elastomeric elements (10); whereby at least one of the elements (10) including a sipe, the sipe extending from the ground engaging elements (10), the sipe having a first surface area (23) and an opposite facing second surface area (24), each surface area (23,24) has a plurality of recesses (21) or protrusions (20), each recess (21) has a centroid (x21) aligned with a centroid (x20) of a protrusion, each protrusion (20) extends from the first or second surface area to interlock with a recess (21), each protrusion (20) or recess (21) having at least one radially inner end above the depth of the sipe or radially outer end located below the radially outer surface of the ground engaging element;
the tire tread being **characterized in that**: said protrusions (20) and recesses (21) extending from a substantially flat surface (23) in the at least one of the tread elements (10).

2. The tire tread of claim 1 wherein the recesses (21) and protrusions (20) have a substantially hemispherical shape.

3. A tire tread according to claim 1, wherein at least two of said the recesses (21) and protrusions (20) are arranged along a straight line.

4. A tire tread according to claim 1, wherein the recesses (21) and protrusions (20) arranged along a straight line are equally spaced.

5. A tire tread according to claim 1, wherein at least two of said the recesses (21) and protrusions (20) are arranged along a straight line, said line forming an angle comprised between 0 and 45 degrees with the adjacent surface of the tread.

6. A tire tread according to claim 4, wherein at least some of the recesses (21) and protrusions (20) are arranged along two or more parallel lines.

7. A tire tread according to claim 1, wherein the recesses (21) and protrusions (20) in one sipe have all the same depth relative to the radial height of the element containing the one sipe.

8. A tire tread according to claim 1, wherein there are at least three sipes in a ground engaging elastomeric elements (10), the sipes having substantially equal lateral spacing.

9. A tire tread according to claim 1, wherein there are at least three sipes in a ground engaging elastomeric elements (10), the spacing between the sipes closest to the tread grooves, defining the ground engaging elements, being smaller than the spacing between the sipes located towards the center of the elements (10).

10. A tire tread according to claim 1 wherein the centroids of recesses and the adjoining protrusion are coincident as the sipes are closed when the tire element enters the contact patch under normal load.

11. The tire tread of claim 1 wherein the plurality of protrusions (20) and recesses (21) are configured in one or more of the following ways to control the vertical and horizontal stiffness of the element (10) to be molded around the blade (1) by (a) varying the relative size of the protrusions (20) and aligned recesses (21), (b) varying the quantity of the protrusions (20) and aligned recesses (21), (c) increasing or decreasing the size or quantity of protrusions (20) and aligned recesses (21) along the vertical displacement of the blade, and (d) increasing or decreasing the size or quantity of the protrusions (20) and aligned recesses (21) along the horizontal displacement of the blade (1) (61 through 68, 92, 93, 94).

## Patentansprüche

1. Reifen-Laufstreifen mit elostomerem Material, wobei der Laufstreifen eine Vielzahl von am Boden angreifenden elastomeren Elementen (10) aufweist; wobei mindestens eines der Elemente (10) einen Lamellenschnitt enthält, welcher Lamellenschnitt sich von den am Boden angreifenden Elementen (10) weg erstreckt und einen ersten Oberflächenbereich (23) und einen zweiten, entgegengesetzt gewendeten Oberflächenbereich (24) aufweist, wobei jeder Oberflächenbereich (23, 24) eine Vielzahl von Vertiefungen (21) oder Erhöhungen (20) aufweist, jede Vertiefung (21) einen mit einem Massenschwerpunkt (x20) einer Erhöhung ausgerichteten Massenschwerpunkt (x21) besitzt, jede Erhöhung (20) sich von dem ersten oder zweiten Oberflächenbereich in Formschluss mit einer Vertiefung (21) erstreckt, jede Erhöhung (20) oder Vertiefung (21) mindestens ein radial inneres Ende über der Tiefe des Lamellenschnitts oder ein unter der radial äußeren Oberfläche des am Boden angreifenden Elements gelegenes radial äußeres Ende aufweist;
wobei der Reifenlaufstreifen **dadurch gekennzeichnet ist, dass** die Erhöhungen (20) und Vertiefungen (21) von einer im wesentlichen flachen Oberfläche (23) in dem mindestens einen der Laufstreifenelemente (10) abstehen.

2. Reifenlaufstreifen nach Anspruch 1, bei dem die Vertiefungen (21) und die Erhöhungen (20) im Wesentlichen halbkugelförmig sind.

3. Reifenlaufstreifen nach Anspruch 1, bei dem mindestens zwei der Vertiefungen (21) und Erhöhungen (20) längs einer geraden Linie angeordnet sind.

4. Reifenlaufstreifen nach Anspruch 1, bei dem die längs einer geraden Linie angeordneten Vertiefungen (21) und Erhöhungen (20) gleichmäßig beabstandet sind.

5. Reifenlaufstreifen nach Anspruch 1, bei dem mindestens zwei der Vertiefungen (21) und Erhöhungen (20) längs einer geraden Linie angeordnet sind, wobei die Linie einen Winkel zwischen 0 und 45 Grad mit der benachbarten Oberfläche des Laufstreifens bildet.

6. Reifenlaufstreifen nach Anspruch 4, bei dem mindestens einige der Vertiefungen (21) und Erhöhungen (20) längs zwei oder mehr parallelen Linien angeordnet sind.

7. Reifenlaufstreifen nach Anspruch 1, bei dem die Vertiefungen (21) und Erhöhungen (20) in einem Lamellenschnitt relativ zur radialen Höhe des den einen Lamellenschnitt enthaltenden Elements alle die gleiche Tiefe haben.

8. Reifenlaufstreifen nach Anspruch 1, bei dem mindestens drei Lamellenschnitte in einem am Boden angreifenden elastomeren Element (10) angeordnet sind, wobei die Lamellenschnitte im wesentlichen gleichen Querabstand aufweisen.

9. Reifenlaufstreifen nach Anspruch 1, bei dem mindestens drei Lamellenschnitte in einem am Boden angreifenden elastomeren Element (10) vorhanden sind, wobei der Abstand zwischen den am nächsten zu den die am Boden angreifenden Elemente bestimmenden Laufstreifennuten liegenden Lamellenschnitten kleiner als der Abstand zwischen den zu der Mitte der Elemente (10) hin angeordneten Lamellenschnitten ist.

10. Reifenlaufstreifen nach Anspruch 1, bei dem die Massenschwerpunkte der Vertiefungen und der benachbarten Erhöhung zusammenfallen, wenn die Lamellenschnitte beim Eintreten des Reifenelements in den Aufstandsfleck unter normaler Last geschlossen werden.

11. Reifenlaufstreifen nach Anspruch 1, bei dem die Vielzahl von Erhöhungen (20) und Vertiefungen (21) in einer oder mehrerer der folgenden Weisen gestaltet ist, um die vertikale und horizontale Steifigkeit des um die Klinge (1) zu formenden Elementes (10) zu steuern, durch (a) Verändern der relativen Größe der Erhöhungen (20) und der damit ausgerichteten Vertiefungen (21), (b) Verändern der Menge der Erhöhungen (20) und der damit ausgerichteten Vertiefungen (21), (c) Erhöhen oder Verringern der Größe oder Menge von Erhöhungen (20) und ausgerichteten Vertiefungen (21) längs des vertikalen Versatzes der Klinge, und (d) Erhöhen oder Vermindern der Größe oder Menge der Erhöhungen (20) und damit ausgerichteten Vertiefungen (21) längs der horizontalen Versetzung der Klinge (1) (61 bis 68, 92, 93, 94).

## Revendications

1. Bande de roulement de bandage pneumatique possédant une matière élastomère, la bande de roulement possédant plusieurs rainures définissant des éléments élastomères (10) entrant en contact avec le sol, dans laquelle au moins un des éléments (10) englobe une lamelle, la lamelle s'étendant depuis les éléments (10) entrant en contact avec le sol, la lamelle possédant une première aire de surface (23) et une deuxième aire de surface opposée (24), chaque aire de surface (23, 24) possédant plusieurs évidements (21) ou saillies (20), chaque évidement (21) possédant un centre de gravité (x21) disposé en alignement avec le centre de gravité (x20) d'une saillie, chaque saillie (20) s'étendant depuis la première ou deuxième aire de surface à des fins de verrouillage réciproque avec un évidement (21), chaque saillie (20) ou évidement (21) possédant au moins une extrémité interne en direction radiale au-dessus de la profondeur de la lamelle ou une extrémité externe en direction radiale située en dessous de la surface externe en direction radiale de l'élément entrant en contact avec le sol ;
la bande de roulement du bandage pneumatique étant **caractérisée en ce que** lesdites saillies (20) et lesdits évidements (21) s'étendent depuis une surface essentiellement plate (23) dans ledit ou lesdits éléments de bande de roulement (10).

2. Bande de roulement de bandage pneumatique selon la revendication 1, dans laquelle les évidements (21) et les saillies (20) possèdent une configuration essentiellement hémisphérique.

3. Bande de roulement de bandage pneumatique selon la revendication 1, dans laquelle au moins deux desdits évidements (21) et desdites saillies (20) sont arrangés le long d'une ligne rectiligne.

4. Bande de roulement de bandage pneumatique selon la revendication 1, dans laquelle les évidements (21) et les saillies (20) arrangés le long d'une ligne rectiligne sont équidistants.

5. Bande de roulement de bandage pneumatique selon la revendication 1, dans laquelle au moins deux desdits évidements (21) et desdites saillies (20) sont arrangés le long d'une ligne rectiligne, ladite ligne formant un angle compris entre 0 et 45 degrés avec la surface adjacente de la bande de roulement.

6. Bande de roulement de bandage pneumatique selon la revendication 4, dans laquelle au moins un certain nombre des évidements (21) et des saillies (20) sont arrangés le long de deux lignes parallèles ou plus.

7. Bande de roulement de bandage pneumatique selon la revendication 1, dans laquelle les évidements (21) et les saillies (20) dans une lamelle possèdent tous la même profondeur par rapport à la hauteur radiale de l'élément contenant ladite lamelle.

8. Bande de roulement de bandage pneumatique selon la revendication 1, dans laquelle au moins trois lamelles sont présentes dans un élément élastomère (10) entrant en contact avec le sol, les lamelles possédant un écartement latéral essentiellement égal.

9. Bande de roulement de bandage pneumatique selon la revendication 1, dans laquelle au moins trois lamelles sont présentes dans un élément élastomère (10) entrant en contact avec le sol, l'écartement entre les lamelles les plus proches des rainures de la bande de roulement définissant les éléments entrant en contact avec le sol étant inférieur à l'écartement entre les lamelles situées à proximité du centre des éléments (10).

10. Bande de roulement de bandage pneumatique selon la revendication 1, dans laquelle les centres de gravité d'un évidement et d'une saillie adjacente coïncident lors de la fermeture des lamelles lorsque les éléments élastomères du bandage pneumatique pénètrent dans la zone de contact sous une charge normale.

11. Bande de roulement de bandage pneumatique selon la revendication 1, dans laquelle lesdites saillies (20) et lesdits évidements (21) sont configurés conformément à une ou plusieurs des manières indiquées ci-après pour régler la rigidité verticale ou horizontale des éléments (10) qui doivent être moulés autour de la lame (1), c'est-à-dire (a) en faisant varier la dimension relative des saillies (20) et des évidements (21) disposés en alignement ; (b) en faisant varier la quantité des saillies (20) et des évidements (21) disposés en alignement ; (c) en augmentant ou en diminuant la dimension ou la quantité des saillies (20) et des évidements (21) disposés en alignement le long du déplacement vertical de la lame ; et (d) en augmentant ou en diminuant la dimension ou la quantité des saillies (20) et des évidements (21) disposés en alignement le long du déplacement horizontal de la lame (1) (de 61 à 68, 92, 93, 94).
